# EUROPÄISCHE PATENTSCHRIFT

(11) **EP 1 308 065 B1**
(45) Veröffentlichungstag und Bekanntmachung des Hinweises auf die Patenterteilung: **11.10.2006**
(21) Anmeldenummer: 01969231.8
(22) Anmeldetag: 13.08.2001
(51) Int. Cl.: H04Q 7/38

(54) **VERFAHREN UND BASISSTATION ZUR SIGNALÜBERTRAGUNG IN EINEM FUNK-KOMMUNIKATIONSSYSTEM**
METHOD AND BASE STATION FOR TRANSMITTING SIGNALS IN A RADIO COMMUNICATIONS SYSTEM
PROCEDE ET STATION DE BASE POUR LA TRANSMISSION DE SIGNAUX DANS UN SYSTEME DE COMMUNICATION RADIO

(30) Priorität: 11.08.2000 DE 10039429
(43) Veröffentlichungstag der Anmeldung: 07.05.2003
(73) Patentinhaber: SIEMENS AKTIENGESELLSCHAFT, 80333 München (DE)
(72) Erfinder: SCHNIEDENHARN, Jörg, 13587 Berlin (DE); PAPOUTSIS, Georgios, 10719 Berlin (DE)
(86) Internationale Anmeldenummer: PCT/DE2001/003101
(87) Internationale Veröffentlichungsnummer: WO 2002/015616

(56) Entgegenhaltungen:
- WO-A-99/33288
- US-A- 5 857 153
- US-A- 5 924 026

## Beschreibung

Die Erfindung betrifft ein Verfahren zur Signalübertragung in einem Funk-Kommunikationssystem. Die Erfindung ist insbesondere für einen Einsatz in einem Mobilfunk- oder drahtlosen Teilnehmeranschlußsystem geeignet.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Bei der Entwicklung von Mobilfunksystemen ist es wichtig, bei jeder neuen Version eines Protokolls die Kompatibilität zu älteren Versionen zu gewährleisten. Damit wird insbesondere sichergestellt, daß neuere Teilnehmerendgeräte in einer Umgebung von Basisstationen, die eine ältere Protokollversion unterstützen, richtig erkannt und angesprochen werden können, und umgekehrt Teilnehmerendgeräte, die eine ältere Protokollversion unterstützen, in neuen Netzumgebungen richtig weiter funktionieren. Dadurch soll aber nicht verhindert werden, daß die bestehenden Nachrichten der Kontrollebene zwischen Teilnehmerendgerät und Basisstation erweitert werden, um neue Dienste bzw. Features zu unterstützen. Zu diesem Zweck müssen alle Signalisierungsnachrichten eine Art von Erweiterungsmechanismen vorsehen, damit dieselbe Nachricht in neueren Versionen des Protokolls neue Elemente enthalten kann, ohne die Funktionalität "alter" Empfänger zu beeinträchtigen.

Bei diesen Erweiterungen unterscheidet man in dem beschriebenen UMTS-Mobilfunksystem beispielsweise zwischen kritischen und unkritischen Erweiterungen. Wenn der Empfänger einer Nachricht ein neues Element erkennt, das er nicht decodieren kann (da es beispielsweise in einer neueren Version definiert wird, die der Empfänger noch nicht kennt) und dieses Element als kritisch gekennzeichnet ist, soll er die Nachricht als unverständlich zurückweisen. Durch diese Zurückweisung erkennt der Sender, daß der Empfänger eine ältere Version des Protokolls unterstützt, und wird die Nachricht ohne die Zusatzelemente der neuen Version wiederholen. Falls der Empfänger in der Nachricht ein unbekanntes Element sieht, das als unkritisch gekennzeichnet ist, dann soll er dieses Element ignorieren und versuchen, den Rest der Nachricht richtig zu decodieren. Bei der Entwicklung der Erweiterungsmechanismen ist es wichtig, den nötigen Nachrichten-Overhead minimal zu halten, und das Umschalten zur richtigen Protokollversion (die neueste, die beide Seiten verstehen können) mit minimaler Verzögerung stattfinden kann.

Lösungen für zwei Probleme in Bezug auf Erweiterungen von Kommunikationsprotokollen werden vorgeschlagen:
Problem 1:
   Bei den aus dem Stand der Technik des GSM- und UMTS-Mobilfunksystem bekannten Kommunikationsprotokollen (z.B. im Radio Ressource Teil) werden Erweiterungsmechanismen dadurch realisiert, daß am Ende einer Nachricht Platz reserviert wird, der mit Erweiterungen gefüllt werden kann, und die beispielsweise auch ein sogenanntes Flag (Anzeiger) haben können (z.B. bei UMTS), das die Erweiterung als kritisch oder unkritisch gekennzeichnet. Dabei werden die Nachrichten nachteilig mit jeder neuen Version größer, da es keine Mechanismen gibt, die Nachricht zu kürzen, d.h. Elemente aus älteren Protokollversionen können nicht entfernt werden. Die aktuelle Erweiterung liegt somit immer am Ende der vorherigen Version.
Problem 2:
   Empfängt ein Teilnehmerendgerät eine Nachricht mit einer kritischen Erweiterung (z.B. bei UMTS), die von diesem nicht verstanden wird, so wird die ganze Nachricht zurückgewiesen, und das Netz versucht es noch mal, mit der gleichen Nachricht einer älteren Version des Protokolls. Bei der Auswahl der älteren Version der Nachricht kann das Netzwerk nach dem Stand der Technik auf keinerlei Informationen über Protokollversionen, die das Teilnehmerendgerät versteht, zurückgreifen. Eine einfachste Lösung für das Netzwerk wäre es daher, die älteste Version des Protokolls zu verwenden, bei der das Netzwerk davon ausgehen kann, daß jedes Teilnehmerendgerät sie unterstützt. Damit würde jedoch darauf verzichtet, die neueste Version, die das Teilnehmerendgerät unterstützen könnte, zu verwenden. Eine weitere Möglichkeit wäre, dem Teilnehmerendgerät immer die jeweils nächst ältere Version der Nachricht zu senden. Dieser Vorgang müßte gegebenenfalls mehrmals wiederholt werden, z.B. wenn der Versions-Unterschied zwischen Sender und Empfänger groß ist, was zu erheblichen Verzögerung im Protokollablauf führen kann.

Aus der US-A-5 924 026 ist ein Verfahren bekannt, bei dem von einer Basisstation eines Mobilfunksystems eine Information, welche ein von der Basisstation unterstütztes Protokoll spezifiziert, zu einer Mobilstation sendet. Nach Empfang dieser Information sendet die Mobilstation eine Nachricht zu der Basisstation, welche zumindest ein von der Mobilstation unterstütztes Protokoll angibt.

Aus der US-A-5 857 153 ist ein Verfahren zum Austausch von Kommunikationsprotokollen bekannt, bei dem in Signalisierungsnachrichten jeweils eine Anzahl von modifizierten Nachrichtenparametern enthalten sind.

Aus der WO 99 33288 A ist schließlich bekannt, dass eine Protokolldateneinheit zur Verwendung in einem zellularen Funk-Kommunikationssystem einen Kopf mit einem Protokolldiskriminator aufweist, mittels dem unter anderem die Protokolldateneinheit identifiziert werden kann.

Der Erfindung liegt die Aufgabe zugrunde, ein Verfahren anzugeben, das eine vereinfachte Protokollabstimmung zwischen Komponenten eines Funk-Kommunikationssystems ermöglicht.

Diese Aufgabe wird durch die Verfahren sowie durch das Basisstationssystem gemäß den unabhängigen Patentansprüchen gelöst. Vorteilhafte Weiterbildungen der Erfindung sind den abhängigen Patentansprüchen zu entnehmen.

Besonders vorteilhaft wird das beschriebene erfindungsgemäße Verfahren in einem als ein Mobilfunksystem oder drahtlosen Teilnehmeranschlußsystem verwirklichten Funk-Kommunikationssystem, mit insbesondere einem TDMA- und/oder CDMA-Teilnehmerseparierungsverfahren, eingesetzt.

Ausführungsbeispiele der Erfindung werden anhand der beiliegenden Zeichnungen näher erläutert.

Dabei zeigen
- FIG 1: ein Blockschaltbild eines Funk-Kommunikationssystems,
- FIG 2: eine mögliche Implementierung von Protokoll-Erweiterungen, wenn diese nur am Ende der vorherigen Version möglich sind, und
- FIG 3: eine weitere mögliche Implementierung von Protokoll-Erweiterungen.

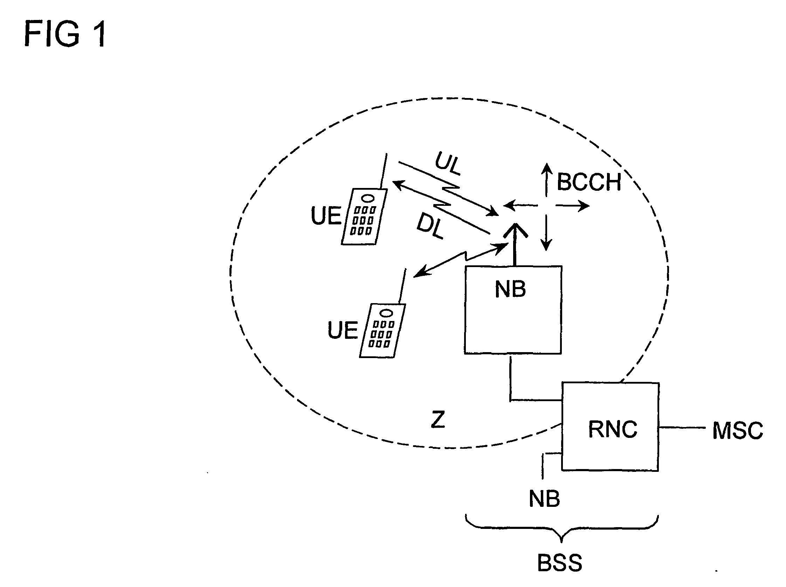

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen. Durch jede Basisstation NB wird zumindest eine Funkzelle Z gebildet. Die Größe der Funkzelle Z wird in der Regel durch die Reichweite eines Organisationskanals (BCCH - Broadcast Control Channel), der von den Basisstationen NB mit einer erhöhten und konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Das Beispiel der FIG 1 zeigt zwei Teilnehmerstationen UE, die sich in der Funkzelle Z der Basisstation NB befinden. Die Teilnehmerstationen UE haben jeweils eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindungen werden beispielsweise durch den Teilnehmerstationen UE zugeteilte unterschiedliche Spreizkodes (CDMA-Codes) separiert.

Während der Verbindung werten die Teilnehmerstationen UE und die Basisstation NB weiterhin periodisch Übertragungseigenschaften der Funkschnittstelle mittels einer Kanalschätzung aus.

Zur Lösung des einleitend beschriebenen Problems 1 wird vorgeschlagen, gleich am Anfang der Nachricht zu signalisieren, wie viele kritische Änderungen die Nachricht enthält. Eine Änderung kann dabei aus Erweiterungen im bisherigen Sinne bestehen, aber auch das Entfernen oder Ändern von bereits bestehenden Elementen enthalten. Ein Vorteil dieser Methode besteht darin, daß der Empfänger nicht mit einem Decodieren der Nachricht beginnen muß, wenn er am Anfang erkennt, daß die Nachricht unbekannte kritische Elemente enthält, was zur Rückweisung der Nachricht führt. Zusätzlich hat diese Methode den Vorteil, daß die neue Nachricht nicht an die Struktur der alten Nachricht gebunden ist, und somit nicht mehr benötigte Elemente nicht mehr übertragen werden müssen.

Die nicht kritischen Erweiterungen können entsprechend dem Stand der Technik am Ende der Nachricht stehen, da in diesem Fall die Nachricht nicht zurückgewiesen wird, und somit der Anfang der Nachricht sowieso decodiert werden muß. Die Nachricht besteht also insgesamt aus drei Teilen. Der erste Teil ist eine ganze Zahl, die angibt, wie viele kritische Änderungen in diese Nachricht seit der ersten Version des Protokolls implementiert wurden. Diese Zahl kann beispielsweise mit einer beliebigen (Binär)codierung codiert werden, die eine sogenannte Fano-Bedingung erfüllt (kein Codewort ist Anfang eines anderen Codewortes). Der zweite Teil enthält die aktuelle Version der Nachricht (so wie sie nach der entsprechenden Anzahl der Änderungen definiert ist). Der dritte Teil enthält eine oder mehrere unkritische Erweiterungen. Vor jeder dieser Erweiterungen signalisiert ein bit, daß noch eine weitere folgt, nach der letzten signalisiert ein bit, daß diese die letzte war.

Es wird demnach die Kennzeichnung der Erweiterungen, die bisher über alle geänderten Nachrichtenelemente verteilt war, an den Anfang der Nachricht gezogen. Die Bitfolge dient dann entweder direkt als Versions-Code oder kann nachfolgend noch zusätzlich codiert werden. Der Vorteil liegt zum einen darin, dass der Empfänger sofort am Anfang der Decodierung erkennen kann, ob er die Version versteht. Außerdem ist es nicht mehr erforderlich, die vorherige Version unverändert zu lassen, z.B. kann ein inzwischen ersetztes Element auch gelöscht werden.

Zur Lösung des einleitend beschriebenen Problems 2 wird folgendes vorgeschlagen. Sind Erweiterungsmechanismen mit Hilfe von Erweiterungsbits realisiert, so können diese Erweiterungsbits als Versionsnummern der Nachricht interpretiert werden. Der Empfänger kann bei der Rückweisungsnachricht signalisieren, wie viele Erweiterungen er maximal in dieser Nachricht erkennen kann. Dadurch kann der Sender beim nächsten Versuch gleich die richtige Version der Nachricht auswählen, ohne alle Zwischenversionen ausprobieren zu müssen.

Eine weitere Möglichkeit besteht darin, einen sogenannten Identifizierer eines Informationselementes der aktuellsten Version der Nachricht in die Rückweisungsnachricht einzufügen. Erfindungsgemäß wird vorgeschlagen, diese Informationselementidentifizierer zur Identifikation einer Version einer Nachricht zu verwenden.

Eine dritte Möglichkeit ist es, explizit im Protokoll Versionsnummern der Nachrichten einzuführen, die nur für die Rückweisungsnachricht verwendet werden.

Der erfinderische Schritt liegt darin, dass Information über kritische Erweiterungen zu einer Nachricht gleich am Anfang übertragen werden und damit jede Version einer Nachricht eine komplett neue Struktur erhalten kann. Im Gegensatz zu Methoden, wo die Protokollversion am Anfang der Nachricht übertragen wird, bekommt hier jede Nachricht individuell eine eigene Version, so daß der Versionszähler nicht bei allen Meldungen erhöht wird, sondern nur bei den Nachrichten, die auch tatsächlich geändert wurden.

Durch die Einfügung einer Versionsidentifizierung in der Rückweisungsnachricht kann auf effiziente Weise das Netzwerk über unterstützte Versionen einer Nachricht informiert werden.

Erfindungsgemäß wird von dem Empfänger eine unverständliche Version einer Message nicht nur zurückgewiesen, sondern dem Sender explizit mitgeteilt, welche Version er unterstützt. Dies vermeidet ggf. unnötige Protokolloperationen, da der Sender beim zweiten Versuch direkt die 'richtige' Version verwenden kann.

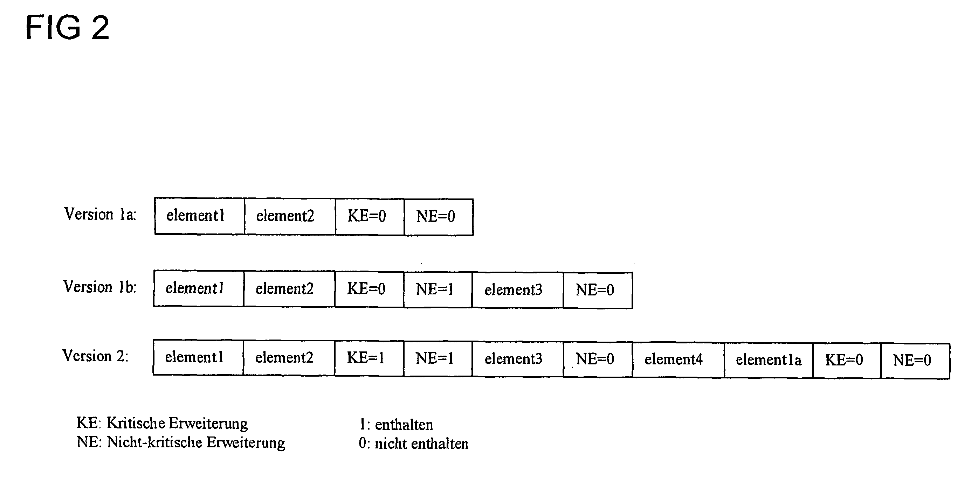

Die FIG 1 und 2 sollen das erfindungsgemäße Verfahren verdeutlichen. Hier wird eine Nachricht in einem Protokoll betrachtet, die in der ersten Version 1a zwei Elemente enthält (element1 und element2). In der zweiten Version 1b hat die Nachricht ein zusätzliches Element (element3), das aber nicht kritisch ist und von einem Empfänger mit einer älteren Protokollversion ignoriert werden kann. In der dritten Version 2 kommt ein kritisches Element hinzugefügt (element4), das erste Element (element1) wird verändert (element 1a) und das dritte (element2) wird nicht mehr gebraucht.

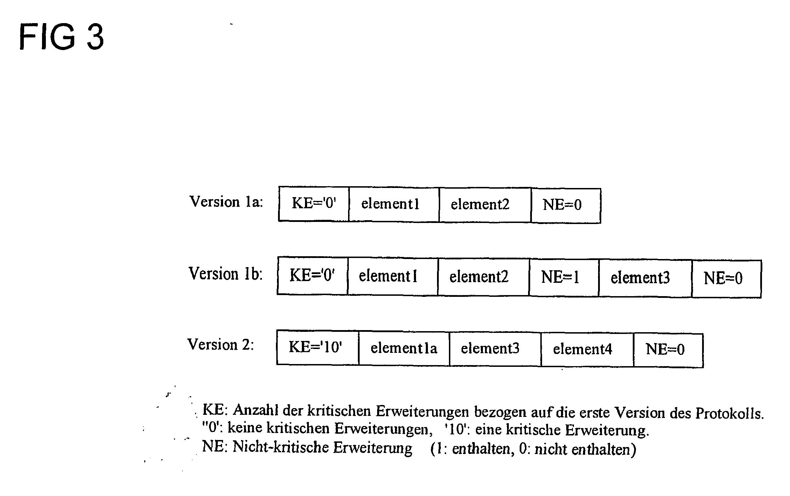

Die FIG 2 zeigt die Nachrichten der drei Versionen für den Fall, daß Erweiterungen nur am Ende des Protokolls eingeführt werden können, wie es z.B. nach dem aktuellen Stand der UMTS Standardisierung im RRC (Radio Resource Control) möglich wäre. Die FIG 3 zeigt im Vergleich dazu die Nachrichten nach dem erfindungsgemäßen Konzept.

Die Lösung des beschriebenen Problems 2 kann auch hier angewendet werden. Empfängt ein Teilnehmerendgerät, das lediglich die Version 1a der Nachricht unterstützt, eine höhere Version, so kann dieses die beiden Erweiterungsbits als Identifikation der unterstützten Nachrichtenversion verwenden.

Die Versionsnummer für die Version 1a ist dabei 00 (KE=0, NE=0).

Die Versionsnummer für die Version 1b ist dabei 010 (KE=0, NE=1, NE=0).

Die Versionsnummer für die Version 2 ist dabei 11000 (KE=1, NE=1, NE=0, KE=0, NE=0).

Denkbar ist alternativ auch, nur die kritischen Erweiterungsbits als Grundlage zu nehmen.

Die Versionsnummer für die Version 1a ist dabei 0 (KE=0).

Die Versionsnummer für die Version 1b ist dabei 0 (KE=0).

Die Versionsnummer für die Version 2 ist dabei 10 (KE=1, KE=0).

Version 1a und Version 1b können beispielsweise die gleiche Versionsnummer verwenden, da sie sich nur um unkritische Elemente unterscheiden.

Die FIG 2 zeigt eine mögliche Implementierung von Erweiterungen, wenn diese nur am Ende der vorherigen Version möglich sind.

Die FIG 3 zeigt eine mögliche Implementierung von Erweiterungen nach der beschriebenen Methode. Hier wird die Anzahl der kritischen Erweiterungen durch die Anzahl der führenden gesetzten bits vor dem ersten ungesetzten bit definiert. Die Anzahl der kritischen Erweiterungen ist dabei gleichbedeutend mit der Anzahl der voneinander unabhängigen Versionen der Nachricht. Ein Teilnehmerendgerät, das nur die Version 1a unterstützt, kann die Versionen 1a und 1b des Protokolls verwenden. Die Version 1b wird dabei gegebenenfalls nicht komplett verstanden, kann aber dennoch aufgrund der unkritischen Erweiterungen benutzt werden. Weitere, dem Fachmann bekannte, Codierungen sind denkbar.

## Patentansprüche

1. Verfahren zur Signalübertragung in einem Funk-Kommunikationssystem, bei dem von einem Basisstationssystem (BSS) des Funk-Kommunikationssystems eine Nachricht eines Protokolls zu einem Teilnehmerendgerät (UE) signalisiert wird, wobei die Nachricht aus zumindest einem Nachrichtenelement besteht,
**dadurch gekennzeichnet,**
**daß** zu Beginn der Nachricht Veränderungen von Nachrichtenelementen im Vergleich zu einer älteren Version der Nachricht signalisiert werden.

2. Verfahren nach Anspruch 1,
**dadurch gekennzeichnet,**
**daß** jeweils eine Anzahl von Veränderungen der Nachrichtenelemente signalisiert wird.

3. Verfahren nach Anspruch 2,
**dadurch gekennzeichnet,**
**daß** nur eine Anzahl kritischer Veränderungen signalisiert wird.

4. Verfahren nach einem vorhergehenden Anspruch,
**dadurch gekennzeichnet,**
**daß** die Veränderungen eine Erweiterung der älteren Nachricht um neue Nachrichtenelemente, ein Entfernen von Nachrichtenelementen, und/oder ein Ändern von Nachrichtenelementen darstellen.

5. Verfahren nach Anspruch 1,
**dadurch gekennzeichnet,**
**daß** das Teilnehmerendgerät (UE) eine Anzahl von Veränderungen von Nachrichtenelementen im Vergleich zu einer ihm bekannten älteren Version der Nachricht zu dem Basisstationssystem (BSS) signalisiert, und
**daß** das Basisstationssystem (BSS) eine dem Teilnehmerendgerät (UE) bekannte Version der Nachricht auswählt und zu dem Teilnehmerendgerät (UE) signalisiert.

6. Verfahren nach Anspruch 5,
**dadurch gekennzeichnet,**
**daß** das Teilnehmerendgerät (UE) die maximal erkannte Anzahl Veränderungen in der Nachricht zu dem Basisstationssystem (BSS) signalisiert.

7. Verfahren nach Anspruch 1,
**dadurch gekennzeichnet,**
**daß** das Teilnehmerendgerät (UE) eine ihm bekannte Version der Nachricht zu dem Basisstationssystem (BSS) signalisiert, und das Basisstationssystem (BSS) die signalisierte Version der Nachricht auswählt und zu dem Teilnehmerendgerät (UE) signalisiert.

8. Basisstationssystem (BSS) eines Funk-Kommunikationssystems, wobei das Funk-Kommunikationssystem als ein Mobilfunksystem oder als ein drahtloses Teilnehmeranschlußsystem verwirklicht ist, mit Mitteln zum Signalisieren einer Nachricht eines Protokolls zu einem Teilnehmerendgerät (UE), wobei die Nachricht aus zumindest einem Nachrichtenelement besteht, und zum Signalisieren von Veränderungen von Nachrichtenelementen im Vergleich zu einer älteren Version der Nachricht zu Beginn der Nachricht.

9. Basisstationssystem (BSS) nach Anspruch 8,
mit Mitteln zum Empfangen einer Signalisierung des Teilnehmerendgerätes (UE) bezüglich einer Anzahl von Veränderungen von Nachrichtenelementen im Vergleich zu einer dem Teilnehmerendgerät (UE) bekannten älteren Version der Nachricht, und Mitteln zum Auswählen einer dem Teilnehmerendgerät (UE) bekannten Version der Nachricht.

10. Basisstationssystem (BSS) nach Anspruch 8 oder 9, welches zumindest eine Einrichtung (RNC) zum Zuweisen von funktechnischen Ressourcen sowie zumindest eine damit verbundene Basisstation (NB) aufweist.

## Claims

1. Method for signal transmission in a radio communications system, in which a message of a protocol is signaled to a subscriber terminal (UE) by a base station system (BSS) in the radio communications system, with the message comprising at least one message element,
**characterized**
**in that** changes to message elements in comparison to an older version of the message are signaled at the start of the message.

2. Method according to Claim 1,
**characterized**
**in that** the number of changes to the message elements is in each case signaled.

3. Method according to Claim 2,
**characterized**
**in that** only the number of critical changes is signaled.

4. Method according to a preceding claim,
**characterized**
**in that** the changes represent an expansion of the older message by new message elements, a removal of message elements, and/or a change to message elements.

5. Method according to Claim 1,
**characterized**
**in that** the subscriber terminal (UE) signals a number of changes to message elements in comparison to an older version of the message, which is known to it, to the base station system (BSS), and
**in that** the base station system (BSS) selects a version of the message which is known to the subscriber terminal (UE) and signals this to the subscriber terminal (UE).

6. Method according to Claim 5,
**characterized**
**in that** the subscriber terminal (UE) signals the maximum identified number of changes in the message to the base station system (BSS).

7. Method according to Claim 1,
**characterized**
**in that** the subscriber terminal (UE) signals a version of the message, which is known to it, to the base station system (BSS), and
the base station system (BSS) selects the signaled version of the message and signals it to the subscriber terminal (UE).

8. Base station system (BSS) in a radio communications system, with the radio communications system being in the form of a mobile radio system or a wire-free subscriber access system, having means for signalling a message of a protcol to a subscriber terminal (UE), with the message comprising at least one message element, and for signalling of changes to message elements in comparison to an older version of the message at the start of the message.

9. Base station system (BSS) according to Claim 8, having means for receiving signalling from the subscriber terminal (UE) with respect to a number of changes to message elements in comparison to an older version of the message which is known to the subscriber terminal (UE), and means for selecting a version of the message which is known to the subscriber terminal (UE).

10. Base station system (BSS) according to Claim 8 or 9, which has at least one device (RNC) for assigning radio resources, as well as at least one base station (NB) which is connected to it.

## Revendications

1. Procédé pour la transmission de signal dans un système de communication radio, dans lequel un message d'un protocole est signalé par un système de station de base (BSS) du système de communication radio à un terminal d'abonné (UE), le message étant composé d'au moins un élément de message,
**caractérisé en ce que**
des modifications d'éléments de message par rapport à une version plus ancienne du message sont signalées au début du message.

2. Procédé selon la revendication 1,
**caractérisé en ce que**
à chaque fois un certain nombre de modifications des éléments de message est signalé.

3. Procédé selon la revendication 2,
**caractérisé en ce que**
seul un certain nombre de modifications critiques est signalé.

4. Procédé selon une revendication précédente,
**caractérisé en ce que**
les modifications présentent une extension du message plus ancien avec des nouveaux éléments de message, un enlèvement d'élément de message, et/ou une modification d'éléments de message.

5. Procédé selon la revendication 1,
**caractérisé en ce que**
le terminal d'abonné (UE) signale un certain nombre de modifications d'éléments de message par rapport à une version plus ancienne, connue de lui, du message au système de station de base (BSS), et
**en ce que** le système de station de base (BSS) sélectionne une version, connue du terminal d'abonné (UE), du message et le signale au terminal d'abonné (UE).

6. Procédé selon la revendication 5,
**caractérisé en ce que**
le terminal d'abonné (UE) signale le nombre maximum reconnu de modifications dans le message au système de station de base (BSS).

7. Procédé selon la revendication 1,
**caractérisé en ce que**
le terminal d'abonné (UE) signale une version du message qu'il connaît au système de station de base (BSS), et le système de station de base (BSS) sélectionne la version signalée du message et le signale au terminal d'abonné (UE).

8. Système de station de base (BSS) d'un système de communication radio, le système de communication radio étant réalisé sous la forme d'un système de téléphonie mobile ou d'un système de raccordement d'abonné sans fil, avec des moyens pour la signalisation d'un message d'un protocole à un terminal d'abonné (UE), le message étant composé d'au moins un élément de message, et pour la signalisation de modifications d'éléments de message par rapport à une version plus ancienne du message au début du message.

9. Système de station de base (BSS) selon la revendication 8, avec des moyens pour la réception d'une signalisation du terminal d'abonné (UE) concernant un certain nombre de modifications d'éléments de message par rapport à une version plus ancienne, connue du terminal d'abonné (UE), du message, et des moyens pour sélectionner une version du message connue du terminal d'abonné (UE).

10. Système de station de base (BSS) selon la revendication 8 ou 9, qui présente au moins un dispositif (RNC) pour l'attribution de ressources techniques de radio et au moins une station de base (NB) reliée à celui-ci.
